# EUROPÄISCHE PATENTANMELDUNG

(11) **EP 3 736 953 A1**
(43) Veröffentlichungstag der Anmeldung: **11.11.2020**
(21) Anmeldenummer: 20173648.5
(22) Anmeldetag: 08.05.2020
(51) Int. Cl.: H02M 1/08, H02M 1/32, H02M 3/335, H02H 7/12, H02H 9/04, H02M 1/00

(54) **SPERRWANDLER MIT SELBSTVERSORGTEM ÜBERSPANNUNGSSCHUTZSCHALTER**

(30) Priorität: 08.05.2019 DE 102019111932
(71) Anmelder: Panasonic Industrial Devices Europe GmbH, 21337 Lueneburg (DE)
(72) Erfinder: AUSTERSCHULTE, Burkhard, 21337 Lüneburg (DE); BERGMANN, Jörn, 21337 Lüneburg (DE)
(74) Vertreter: Königer, Karsten

(57) **Zusammenfassung**

Gegenstand der Erfindung ist ein Sperrwandler umfassend ein als Trennschalter verwendetes Halbleiterschaltelement, dessen Bezugspotential ungleich Null ist, wobei die Energie zum Schalten des Halbleiterschaltelementes aus einem Speicherkondensator entnommen werden kann, wobei zum Aufladen des Speicherkondensators die in der Sperrphase an der Primärwicklung des Transformators anliegende auf die Primärseite reflektierte Ausgangsspannung genutzt wird.

## Beschreibung

Sperrwandler sind bekannt. Bei Sperrwandlern handelt es sich um Gleichspannungswandler, bei denen die Eingangsseite und die Ausgangsseite galvanisch getrennt sind. Auf der Primärseite befindet sich in Serie zum Transformator (Speichertransformator) ein Schalter, beispielsweise ein pulsweitengesteuerter Schalter. In der Leitendphase des Schalters wird der Transformator aufmagnetisiert. In der Sperrphase des Schalters wird die gespeicherte Energie an den sekundärseitigen Verbraucher abgegeben. Ein Beispiel eines Sperrwandlers wird in WO 2016/155737 A1 gezeigt.

Sperrwandler werden beispielsweise in Ladegeräten für Mobiltelefone oder in Netzteilen eingesetzt.

Aufgabe der Erfindung ist es, einen Sperrwandler zur Verfügung zu stellen, der einen Überspannungsschutz oder eine Einschaltstrombegrenzung aufweist.

Diese Aufgabe wird gelöst durch einen Sperrwandler gemäß Anspruch 1.

Die Gleichspannung auf der Eingangsseite eines Sperrwandlers kann durch Gleichrichtung einer Wechselspannung erzeugt werden. Der Überspannungsschutz in Form des High-side-Schalters ist beispielsweise dann vorteilhaft, wenn die Eingangsgleichspannung durch Gleichrichtung einer Wechselspannung erzeugt wird, die Wechselspannung jedoch nicht stabil ist, beispielsweise, weil sie von Diesel-Generatoren erzeugt wird.

Erfindungsgemäß wird die gespeicherte reflektierte sekundärseitige Spannung des Transformators (Speicherdrossel) verwendet, um die für das Schalten des High-side-Schalters erforderliche Energie zu gewinnen. Um ein erhöhtes Bezugspotential für Schalter zu generieren, werden herkömmlicherweise Bootstrap-Schaltungen, Linearregler, Spannungsregler oder zusätzliche Transformatorwicklungen eingesetzt. Die erfindungsgemäße Lösung ermöglicht die Hinzufügung eines Überspannungsschutzes in Form eines High-side-Schalters, ohne dass dafür eine Änderung des Transformators erforderlich wäre. Zusätzliche Wicklungen sind nicht erforderlich. Dies ist insbesondere deshalb besonders vorteilhaft, weil das Volumen für die Aufwicklung von Draht begrenzt ist und durch herkömmliche Transformatoren bereits vollständig ausgenutzt wird. Auch die Anzahl der Pins ist begrenzt. Da die erfindungsgemäße Lösung keine zusätzliche Transformatorwicklung erfordert und auch nur eine geringe Anzahl von Bauelementen erfordert, ist sie besonders kostengünstig.

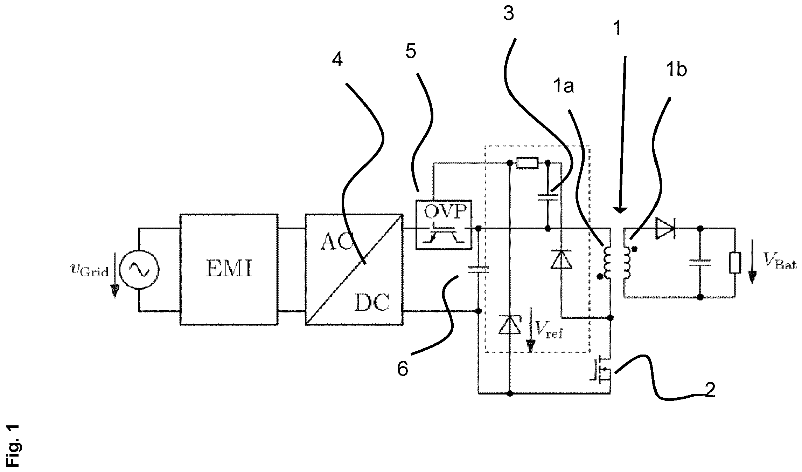

Die Erfindung wird anhand der Figur 1 näher erläutert.

Figur 1 zeigt einen schematischen Schaltplan eines erfindungsgemäßen Sperrwandlers. An einem Ausgang der Gleichspannungsquelle 4 ist ein als Trennschalter verwendetes Halbleiterschaltelement 5, dessen Bezugspotential ungleich Null ist (High-side-Schalter), angeordnet. Als High-side Schalter kann beispielsweise ein IGBT IKA08N65ET6 von Infineon verwendet werden. Dieses Halbleiterschaltelement 5 kann im Fall einer Überspannung das Gesamtsystem trennen. Figur 1 zeigt die Ansteuerschaltung (Treiberschaltung) für den High-side-Schalter 5. Der Transformator 1 umfasst eine Primärseite 1a und eine Sekundärseite 1b. Eine pulsweitengesteuerter Schalter 2 befindet sich in Serie zu der Primärseite 1a des Transformators. Ein Beispiel für einen solchen Schalter 2 ist IPA65R095C7 von Infineon. In der Sperrphase des Schalters 2 liegt an der Primärseite 1a des Transformators eine von der Sekundärseite des Transformators 1b reflektierte Spannung an. Diese Spannung wird genutzt, um den Speicherkondensator 3 aufzuladen. Der Speicherkondensator lädt sich auf die reflektierte Ausgangsspannung (Sekundärspannung) plus die parasitäre Spannung, die die Streuinduktivität des Transformators erzeugt, auf. Das Aufladen des Speicherkondensators 3 erfolgt bereits in der ersten Sperrphase. Soweit erforderlich, wird der Speicherkondensator 3 in jeder weiteren Speicherphase weiter aufgeladen bzw. erneut aufgeladen. Die Energie zum Ausschalten des Halbleiterelements 5 kann dem Speicherkondensator entnommen werden. Wenn das Halbleiterelement 5 ausschaltet, wird das Gesamtsystem getrennt. Das Ausschaltkriterium wird durch einen Vergleich der momentanen gleichgerichteten Netzspannung und einer eingestellten Referenzspannung definiert. Die Referenzspannung ergibt sich aus der maximal zulässigen Spannung des Zwischenkreiskondensators 6, welcher als limitierender Faktor zu sehen ist.

Die Energie in dem Transformator reicht auch für ein Wiedereinschalten des High-side-Schalters aus.

## Patentansprüche

1. Sperrwandler umfassend ein als Trennschalter verwendetes Halbleiterschaltelement, dessen Bezugspotential ungleich Null ist, wobei die Energie zum Schalten des Halbleiterschaltelementes aus einem Speicherkondensator entnommen werden kann, wobei zum Aufladen des Speicherkondensators die in der Sperrphase an der Primärwicklung des Transformators anliegende auf die Primärseite reflektierte Ausgangsspannung genutzt wird.

2. Sperrwandler nach Anspruch 1, **dadurch gekennzeichnet, dass** die Energie zum Ausschalten des Halbleiterschaltelements aus dem Speicherkondensator entnommen werden kann.

3. Sperrwandler nach Anspruch 2, **dadurch gekennzeichnet, dass** das Ausschaltkriterium durch einen Vergleich der momentanen gleichgerichteten Netzspannung und einer eingestellten Referenzspannung definiert wird.

4. Sperrwandler nach Anspruch 3, **dadurch gekennzeichnet, dass** sich die Referenzspannung aus der maximal zulässigen Spannung eines Zwischenkreiskondensators ergibt.
